# EUROPÄISCHE PATENTANMELDUNG

(11) **EP 1 801 474 A1**
(43) Veröffentlichungstag der Anmeldung: **27.06.2007**
(21) Anmeldenummer: 06022331.0
(22) Anmeldetag: 25.10.2006
(51) Int. Cl.: F16K 11/087, B01J 49/00

(54) **Mehrwegekugelventil**

(30) Priorität: 21.12.2005 DE 102005061297
(71) Anmelder: GRÜNBECK Wasseraufbereitung GmbH, 89416 Höchstädt a.d. Donau (DE)
(72) Erfinder: Pöpperl, Markus, 86850 Fischach (DE)
(74) Vertreter: Hofer, Dorothea

(57) **Zusammenfassung**

Die vorliegende Erfindung betrifft ein Ventil, welches ein Gehäuse (4), einen in dem Gehäuse (4) angeordneten Kugelkörper (6), der um eine Drehachse (8) in zumindest drei vorbestimmte Drehstellungen drehbar ist, zwei Verbindungs-Anschlüsse (20, 22) und mindestens drei Auswahl-Anschlüsse (18) an dem Gehäuse (4) aufweist. Ferner sind zwei voneinander getrennte Durchgänge (25, 26) vorgesehen, die zumindest teilweise in dem Zwischenraum (32) zwischen Kugelkörper (6) und Gehäuse (4) und/oder in dem Kugelkörper (6) verlaufen. Ein erster Verbindungs-Anschluß (20) ist durch einen ersten Durchgang (25) mit jeweils mindestens einem der Auswahl-Anschlüsse (18) verbindbar, wobei in jeder der vorbestimmten Drehstellungen ein anderer Auswahl-Anschluß (18) über den ersten Durchgang (25) mit dem ersten Verbindungsanschluß (20) verbunden wird, und wobei der zweite Verbindungs-Anschluß (22) in den vorbestimmten Drehstellungen durch den zweiten Durchgang (26) mit den jeweils anderen Auswahl-Anschlüssen (18), die nicht mit dem ersten Durchgang (25) verbunden sind, verbunden wird. Die Erfindung betrifft ferner die Verwendung solch eines Ventils in einer Wasser-Enthärtungsanlage.

## Beschreibung

Die vorliegende Erfindung betrifft ein Ventil, eine Verwendung solch eines Ventils in einer Wasser-Enthärtungsanlage, sowie eine Wasser-Enthärtungsanlage mit mindestens drei Austauschbehältern.

Kugelventile mit einem Gehäuse und einem in dem Gehäuse angeordneten Kugelkörper, der um eine Drehachse drehbar ist, sind allgemein bekannt. Bei derartigen bekannten Kugelventilen wird durch Verdrehen des Kugelkörpers eine Strömung von Fluid zu einem gewünschten Ausgangsanschluß gelenkt oder unterbrochen. Kugelventile zeichnen sich durch ihre relativ einfache Bauweise und eine platzsparende Anordnung aus.

Bei bekannten Rohrleitungssystemen, insbesondere in Fällen, in denen Strömungen in mehreren Rohren synchron gesteuert werden müssen, sind oftmals eine komplizierte Anordnung der Rohrleitungen und das Vorsehen von mehreren Ventilen, die parallel und/oder in Reihe geschaltet werden, notwendig, um die Strömungen in den jeweiligen Rohrleitungen gleichzeitig zu steuern. Bei solchen komplizierten Anordnungen kommt häufig hinzu, daß eine symmetrische Anordnung der Rohrleitungen nicht möglich ist. Hierdurch treten aufgrund des unterschiedlichen Strömungswiderstandes unterschiedliche Durchflußmengen in den einzelnen Rohrleitungen auf. Dadurch ist zum Teil die Vorsehung von Durchflußreglern in den einzelnen Rohrleitungen notwendig, was wiederum die Komplexität der baulichen Anordnung sowie die Kosten erhöht.

Dieses Problem tritt insbesondere bei Wasser-Enthärtungsanlagen auf, die in der Regel nach dem Ionenaustauschverfahren arbeiten und wie folgt aufgebaut sind. Es werden Austauschbehälter eingesetzt, die in der Regel mit einem geeigneten Ionenaustauscherharz gefüllt sind. Wasser, das enthärtet werden soll, wird in solch einen Austauschbehälter eingeleitet und durchströmt das Ionenaustauscherharz. Hierbei werden Mineralien im Wasser gegeneinander ausgetauscht und das Wasser wird enthärtet. Das Wasser, das nach dem Durchströmen des Austauschbehälters enthärtet ist, wird in der Regel in die Wasserleitung zurückgeleitet. Je nach Anwendung wird das enthärtete Wasser vor dem Zurückleiten mit gewöhnlichem Brauchwasser auf den gewünschten Härtegrad vermischt. Gegebenenfalls werden noch gewünschte Mineralstoffe hinzugefügt, die beispielsweise einen Korrosionsschutz in verzinkten Stahlrohren bewirken.

Da das Ionenaustauscherharz während des Enthärtungsvorganges zunehmend mit Härtebildnern belegt wird, müssen die Austauschbehälter von Zeit zu Zeit regeneriert werden. Hierzu wird Salzsole in den Austauschbehälter eingeleitet, wobei der in dem Austauschbehälter angesammelte Kalk in der Salzsole gelöst wird. Die Salzsole mit dem gelösten Kalk wird aus dem Austauschbehälter ausgeleitet und in eine Abflussleitung abgeleitet. Anschließend kann der regenerierte Austauschbehälter wieder zum Enthärten verwendet werden.

Während des Regenerationsvorganges hingegen kann der entsprechende Austauschbehälter nicht zum Enthärten eingesetzt werden. Deshalb weisen Wasser-Enthärtungsanlagen in der Regel zwei Austauschbehälter auf. Die Effektivität der Enthärtung korreliert mit dem Querschnitt des jeweiligen Austauschbehälters, der von dem Wasser durchströmt wird, wobei bei einem größeren Querschnitt eine höhere Effektivität der Enthärtung erzielt wird. Die Herstellung von Austauschbehältern mit großem Querschnitt ist jedoch unverhältnismäßig teurer als die Herstellung von Austauschbehältern mit geringerem Querschnitt. Dies führt dazu, daß zum Teil Wasser-Enthärtungsanlagen eingesetzt werden, die drei Austauschbehälter aufweisen, wobei in der Regel zwei Austauschbehälter gleichzeitig zum Enthärten eingesetzt werden, während der dritte gerade regeneriert wird. Dadurch, daß immer zwei Austauschbehälter gleichzeitig zum Enthärten eingesetzt werden können, wird ein großer Strömungsquerschnitt erzielt.

Bei einer derartigen Anordnung mit drei Austauschbehältern muß zu enthärtendes Wasser jeweils zwei Austauschbehälter in einer Betriebsrichtung durchströmen, so daß das Wasser nach dem Ionenaustauschprinzip enthärtet wird, während zu dem dritten Austauschbehälter Salzsole in einer Regenerationsrichtung zugeführt und die Salzsole mit gelöstem Kalk abgeleitet werden muß. Bei der Regeneration kann die Salzsole den Austauschbehälter in der gleichen Richtung durchströmen wie das Wasser während des Enthärtungsvorganges. Je nach Anwendung kann die Regenerationsrichtung aber auch umgekehrt zu der Betriebsrichtung verlaufen.

Wenn die Regenerationsphase eines bestimmten Austauschbehälters abgeschlossen ist, muß die Strömung des Wassers und die Strömung der Salzsole derart umgeschaltet werden, daß der gerade regenerierte Austauschbehälter nun zum Enthärten eingesetzt wird, während ein anderer Austauschbehälter zur Regeneration mit Salzsole durchströmt wird.

Die bisher eingesetzten Rohrsysteme und Ventile, die eine derartige Umschaltung ermöglichen, haben eine komplizierte Anordnung. Insbesondere kann kein symmetrischer Aufbau der Rohrleitungen, die zu den einzelnen Austauschbehältern hinführen und von diesen wegführen, erzielt werden, so daß der Strömungswiderstand zu den einzelnen Austauschbehältern unterschiedlich hoch ist. Hierdurch sind unterschiedliche Durchflußmengen in den einzelnen Austauschbehältern bedingt, was zu einer niedrigeren Effektivität der Enthärtung führt.

Demgemäß liegt die Aufgabe der vorliegenden Erfindung darin, ein Ventil bereitzustellen, durch das zwei Strömungswege simultan steuerbar sind und das sich durch einen einfachen Aufbau auszeichnet. Ferner soll durch die Bereitstellung eines derartigen Ventils bei Wasser-Enthärtungsanlagen, die mindestens drei Austauschbehälter aufweisen, ein symmetrischer Aufbau der Rohrleitungen, die zu den Austauschbehältern hinführen und von diesen wegführen, sowie eine einfache Steuerung der Strömungen innerhalb der Rohrleitungen ermöglicht werden.

Die Aufgabe wird durch ein Ventil gemäß Anspruch 1, eine Verwendung solch eines Ventils gemäß den Ansprüchen 12 und 13, sowie durch eine Wasser-Enthärtungsanlage, bei der ein derartiges Ventil eingesetzt wird, gemäß den Ansprüchen 18 und 19 gelöst. Weiterbildungen der Erfindung sind in den Unteransprüchen gekennzeichnet.

Das erfindungsgemäße Ventil weist ein Gehäuse und einen Kugelkörper, der in dem Gehäuse angeordnet ist, auf. Der Kugelkörper ist um eine Drehachse in zumindest drei vorbestimmte Drehstellungen drehbar. Die Form des Kugelkörpers ist dabei im wesentlichen rotationssymmetrisch zu der Drehachse, so daß eine Drehung um diese möglich ist. An dem Gehäuse sind ferner zwei Verbindungs-Anschlüsse und mindestens drei Auswahl-Anschlüsse vorgesehen, die jeweils zur Verbindung mit externen Rohrleitungen dienen und die einen Durchgang zu dem Innenraum des Gehäuses bilden.

Die Anordnung aus Gehäuse und Kugelkörper weist ferner zwei voneinander getrennte Durchgänge auf, die zumindest teilweise in dem Zwischenraum zwischen Kugelkörper und Gehäuse und/oder in dem Kugelkörper verlaufen. Die zwei getrennten Durchgänge dienen dazu, simultan zwei Strömungen durch das Ventil zu steuern. Beide Durchgänge sind jeweils ständig mit einem zugehörigen Verbindungs-Anschluß verbunden. Durch Drehen des Kugelkörpers in die vorbestimmten Drehstellungen werden die beiden Durchgänge dann mit den gewünschten Auswahl-Anschlüssen verbunden. Die beiden Durchgänge verlaufen zumindest teilweise in dem Zwischenraum zwischen Kugelkörper und Gehäuse und/oder in dem Kugelkörper derart, daß durch einen ersten von den beiden Durchgängen ein erster Verbindungs-Anschluß mit jeweils mindestens einem der Auswahl-Anschlüsse verbindbar ist, wobei in jeder der vorbestimmten Drehstellungen ein anderer Auswahl-Anschluß über den ersten Durchgang mit dem ersten Verbindungs-Anschluß verbunden wird, und wobei der zweite Durchgang in den vorbestimmten Drehstellungen den zweiten Verbindungs-Anschluß mit jeweils anderen Auswahl-Anschlüssen, die nicht mit dem ersten Durchgang verbunden sind, verbindet. Vorteilhaft ist insbesondere, wenn der der zweite Durchgang in den vorbestimmten Drehstellungen den zweiten Verbindungs-Anschluß mit jeweils allen verbleibenden Auswahl-Anschlüssen des Ventils, die nicht mit dem ersten Durchgang verbunden sind, verbindet.

Für die Realisierung der beiden Durchgänge sind verschiedene Ausgestaltungen des Kugelkörpers und des Gehäuses möglich. Der erste Durchgang ist derart ausgebildet, daß er zumindest in den vorbestimmten Drehstellungen, bevorzugt jedoch ständig, mit dem ersten Verbindungs-Anschluß verbunden ist. Dies kann beispielsweise dadurch realisiert werden, daß der erste Verbindungs-Anschluß auf der Drehachse des Kugelkörpers angeordnet ist, und ein entsprechender Eingang, der als Tunnel oder Kanal ausgebildet sein kann, an dem Kugelkörper vorgesehen ist, so daß der Tunnel bzw. der Kanal in allen Drehstellungen ständig mit dem ersten Verbindungs-Anschluß verbunden ist. Ferner kann vorgesehen sein, daß die Kugel und/oder das Gehäuse derart ausgebildet sind, daß ein Zwischenraum zwischen Kugelkörper und Gehäuse ständig oder zumindest in den vorbestimmten Drehstellungen mit dem ersten Verbindungs-Anschluß verbunden ist.

Gleichermaßen müssen das Gehäuse und der Kugelkörper auch derart angepaßt sein, daß der zweite Durchgang zumindest in den vorbestimmten Drehstellungen, bevorzugt jedoch ständig, mit dem zweiten Verbindungs-Anschluß verbunden ist. Die Anordnung des zweiten Verbindungs-Anschlusses und/oder die Ausbildung des Gehäuses und des Kugelkörpers kann dabei so ausgebildet sein, wie dies oberhalb in Bezug auf den ersten Verbindungs-Anschluß und den ersten Durchgang erläutert wurde.

Ferner ist der erste Durchgang in den vorbestimmten Drehstellungen mit jeweils mindestens einem der Auswahl-Anschlüsse verbunden, wobei in jeder der vorbestimmten Drehstellungen ein anderer Auswahl-Anschluß mit dem ersten Durchgang in Verbindung steht. Für den Fall, daß der erste Durchgang in den vorbestimmten Drehstellungen mit jeweils zwei Auswahl-Anschlüssen verbunden ist, kann vorgesehen sein, daß durch Drehen in die nächste vorbestimmte Drehstellung einer der beiden bereits verbundenen Auswahl-Anschlüsse mit dem ersten Durchgang verbunden bleibt, während ein weiterer neuer Auswahl-Anschluß neu mit dem ersten Durchgang verbunden wird.

Die Funktionalität, daß durch Drehen des Kugelkörpers gezielt bestimmte Auswahl-Anschlüsse mit dem ersten Durchgang verbindbar sind, wird durch eine entsprechende Ausbildung des Kugelkörpers und des Gehäuses im Bereich der Auswahl-Anschlüsse erzielt. Dies kann beispielsweise dadurch erzielt werden, daß der erste Durchgang im Bereich vor dem jeweiligen Auswahl-Anschluß als Tunnel durch den Kugelkörper verläuft und mindestens eine Austrittsöffnung aufweist, die durch Drehen des Kugelkörpers zu den gewünschten Auswahl-Anschlüssen ausgerichtet werden kann. Auch kann der erste Durchgang im Bereich vor den Auswahl-Anschlüssen als Kanal, der durch eine in dem Kugelkörper ausgebildete Vertiefung gebildet wird, ausgebildet sein, der durch Drehen des Kugelkörpers zu den gewünschten Auswahl-Anschlüssen ausgerichtet werden kann. Insbesondere kann hierbei vorgesehen sein, daß das obere Ende des Kanals bzw. die Austrittsöffnung des Tunnels in den Stellungen, in denen dieses obere Ende bzw. die Austrittsöffnung nicht mit einem Auswahl-Anschluß verbunden ist, dichtend durch das umliegende Gehäuse abgeschlossen wird. Dadurch wird ein Austreten bzw. Einströmen von Fluid nur in den vorbestimmten Drehstellungen ermöglicht. Falls gewünscht ist, daß in den jeweiligen vorbestimmten Drehstellungen mehr als nur ein Auswahl-Anschluß mit dem ersten Durchgang verbunden ist, kann dies durch eine entsprechende Ausdehnung der Austrittsöffnung oder des Kanals erzielt werden, oder aber der Kanal oder das Tunnel können sich entsprechend aufzweigen.

Der zweite Durchgang ist derart ausgebildet, daß er in den vorbestimmten Drehstellungen mit jeweils anderen Auswahl-Anschlüssen, die nicht mit dem ersten Durchgang verbunden sind, verbunden ist. Hierbei ist bevorzugt, daß der zweite Durchgang jeweils mit allen verbleibenden Auswahl-Anschlüssen, die nicht mit dem ersten Durchgang verbunden sind, verbunden ist. Alternativ kann jedoch auch vorgesehen sein, daß der zweite Durchgang nicht mit allen verbleibenden Auswahl-Anschlüssen verbunden ist, so daß in jeder vorbestimmten Drehstellung mindestens ein Auswahl-Anschluß verbleibt, der weder mit dem ersten noch mit dem zweiten Durchgang verbunden ist. Die Ausbildung des zweiten Durchgangs, des Kugelkörpers und des Gehäuses im Bereich zu den Auswahl-Anschlüssen hin kann gleichermaßen ausgebildet sein, wie dies in Bezug auf den ersten Durchgang beschrieben ist.

Bevorzugt ist eine Anordnung, in der das Ventil in genau drei vorbestimmte Drehstellungen drehbar ist und genau zwei Verbindungs-Anschlüsse und genau drei Auswahl-Anschlüsse aufweist. Bei dieser bevorzugten Ausführungsform weist das Ventil ein Gehäuse, einen in dem Gehäuse angeordneten Kugelkörper, der um eine Drehachse in drei vorbestimmte Drehstellungen drehbar ist, zwei Verbindungs-Anschlüsse und drei Auswahl-Anschlüsse an dem Gehäuse, zwei voneinander getrennte Durchgänge, die zumindest teilweise in dem Zwischenraum zwischen Kugelkörper und Gehäuse und/oder in dem Kugelkörper verlaufen, auf, wobei ein erster Verbindungs-Anschluß durch einen ersten Durchgang mit jeweils einem der Auswahl-Anschlüsse verbindbar ist, wobei in jeder der vorbestimmten drei Drehstellungen ein anderer Auswahl-Anschluß über den ersten Durchgang mit dem ersten Verbindungs-Anschluß verbunden wird, und wobei der zweite Verbindungs-Anschluß in den vorbestimmten Drehstellungen durch den zweiten Durchgang mit den jeweils anderen beiden Auswahl-Anschlüssen, die nicht mit dem ersten Durchgang verbunden sind, verbunden wird.

Gemäß einer vorteilhaften Weiterbildung der Erfindung sind die Auswahl-Anschlüsse im wesentlichen in einer Ebene, die senkrecht zu der-Drehachse verläuft, und in Umfangsrichtung der Drehachse zueinander im wesentlichen äquidistant angeordnet. Hierdurch können in besonders einfacher Weise die beiden Strömungswege durch Drehen des Kugelkörpers umgeschaltet werden, wobei zum Umschalten von einer Schaltposition in die nächste jeweils der gleiche Drehwinkel erforderlich ist. Geringfügige Abweichungen der Positionen der Auswahl-Anschlüsse von der Ebene oder von der äquidistanten Anordnung sind hierbei unerheblich, solange ein derartiges Umschalten durch Drehen des Kugelkörpers ermöglicht wird. Bei einer Anordnung mit genau drei Auswahl-Anschlüssen wäre dann zwischen jeweils zwei Auswahl-Anschlüssen ein Winkel von im wesentlichen 120° eingeschlossen.

Gemäß einer vorteilhaften Weiterbildung der Erfindung ist der zweite Verbindungs-Anschluß im wesentlichen auf der Drehachse angeordnet. Eine geringfügige dezentrale Anordnung ist hierbei unerheblich. Insbesondere in Kombination mit einem Durchgang, der als Tunnel oder Kanal in dem Kugelkörper ausgebildet ist, soll durch die zentrale Anordnung gewährleistet werden, daß der Durchgang in allen vorbestimmten Drehstellungen mit dem Verbindungs-Anschluß verbunden ist. Ferner ist gemäß einer vorteilhaften Weiterbildung vorgesehen, daß der erste Verbindungs-Anschluß in Richtung der Drehachse von der Ebene der Auswahl-Anschlüsse versetzt angeordnet ist. Durch die zu der Ebene versetzte Anordnung der beiden Verbindungs-Anschlüsse wird gewährleistet, daß die Enden der beiden Durchgänge, die mit den jeweiligen Auswahl-Anschlüssen zu verbinden sind, nicht auch mit den Verbindungs-Anschlüssen verbindbar sind.

Weiterhin ist gemäß einer vorteilhaften Weiterbildung vorgesehen, daß der zweite Durchgang von dem zweiten Verbindungs-Anschluß in das Innere des Kugelkörpers führt und sich darin symmetrisch in mindestens zwei Teildurchgänge aufzweigt. Hierdurch wird die Funktionalität erzielt, daß durch Drehen des Kugelkörpers gezielt die gewünschten Auswahl-Anschlüsse mit dem zweiten Durchgang verbunden werden. Durch die symmetrische Ausbildung des zweiten Durchgangs wird gewährleistet, daß der Strömungswiderstand zu dem ersten Ende des Teildurchgangs gleich dem Strömungswiderstand zu dem Ende des zweiten Teildurchgangs ist, so daß hierdurch gleiche Durchflußmengen erzielt werden.

Gemäß einer vorteilhaften Weiterbildung der Erfindung führt der erste Durchgang von dem ersten Verbindungs-Anschluß in den Zwischenraum zwischen Kugelkörper und Gehäuse und setzt sich in einem Kanaldurchgang fort, der durch den Kugelkörper verläuft. Wie oberhalb erläutert, ist hierbei bevorzugt, daß der Zwischenraum zwischen Kugelkörper und Gehäuse ständig mit dem ersten Verbindungs-Anschluß verbunden ist und der Kanaldurchgang durch Drehen des Kugelkörpers zu dem gewünschten mindestens einen Auswahl-Anschluß ausgerichtet wird. Der Kanaldurchgang kann hierbei als Tunnel, der durch den Kugelkörper führt, ausgebildet sein oder alternativ als Kanal, der zu dem Gehäuse hin geöffnet ist und an dem das Gehäuse dichtend anliegt. Die Austrittsöffnung solch eines Tunnels oder offenen Kanals ist in den vorbestimmten Drehstellungen zu dem gewünschten mindestens einen Auswahl-Anschluß ausgerichtet.

Ferner kann gemäß einer vorteilhaften Weiterbildung vorgesehen sein, daß der Kugelkörper gegenüberliegend von dem zweiten Verbindungs-Anschluß einen Fortsatz aufweist, der aus dem Gehäuse vorsteht und einen Eingreifabschnitt zur manuellen oder automatischen Betätigung des Ventils aufweist. Demgemäß wird der Kugelkörper durch den zweiten Verbindungs-Anschluß und den Fortsatz derart gelagert, daß er um die Drehachse drehbar ist. Durch Vorsehung des Eingreifabschnittes ist eine einfache Betätigung des Ventils, die manuell oder automatisch erfolgen kann, möglich.

Weiterhin ist bevorzugt, daß die Äquatorlinie des Kugelkörpers in der Ebene der mindestens drei Auswahl-Anschlüsse verläuft. Hierdurch kann der Innenraum des Kugelkörpers optimal für die Vorsehung des ersten und/oder zweiten Durchganges ausgenutzt werden. Durch Drehen des Kugelkörpers werden dann die Austrittsöffnungen des ersten und zweiten Durchgangs gezielt zu den gewünschten Auswahl-Anschlüssen ausgerichtet.

Ferner ist bevorzugt, daß der erste Verbindungs-Anschluß bezüglich der Ebene der mindestens drei Auswahl-Anschlüsse auf der gegenüberliegenden Seite von dem zweiten Verbindungs-Anschluß angeordnet ist. Hierdurch wird die räumliche Anbringung der beiden Durchgänge erleichtert. Auch wird dadurch die Anbringung von äußeren Rohrleitungen an den Verbindungs-Anschlüssen und den Auswahl-Anschlüssen ermöglicht, ohne daß diese sich räumlich behindern.

Ferner ist bevorzugt, daß der erste Durchgang den Zwischenraum zwischen dem Kugelkörper und dem Gehäuse, der auf beiden Seiten der Ebene der mindestens drei Auswahl-Anschlüsse verläuft, ausnutzt. Hierdurch wird ein größerer Strömungsquerschnitt erzielt.

Gemäß einer vorteilhaften Weiterbildung der Erfindung weist der Kugelkörper in Richtung zu dem zweiten Verbindungs-Anschluß einen kragenförmigen Fortsatz auf, durch den der zweite Durchgang verläuft und der um die Drehachse drehbar in dem Gehäuse gelagert ist. Hierdurch wird in platzsparender Weise eine Lagerung des Kugelkörpers in dem Gehäuse erzielt. Ferner ist bevorzugt, daß ein Einrastmechanismus vorgesehen ist, durch den das Ventil in den vorbestimmten Drehstellungen einrastet. Dadurch kann verhindert werden, daß durch ein geringfügiges Weiterdrehen des Kugelkörpers der Strömungsquerschnitt aufgrund eines unbeabsichtigten Versatzes zwischen Kugelkörper und Gehäuse verringert wird.

Erfindungsgemäß ist ferner vorgesehen, ein Ventil der oben beschriebenen Art in einer Wasser-Enthärtungsanlage zu verwenden, die mindestens drei Austauschbehälter aufweist. Hierbei kann das Ventil als Zuführventil zum Zuführen von Wasser in mindestens zwei der Austauschbehälter in einer Betriebsrichtung und zum Zuführen oder Ableiten von Fluid in oder aus dem mindestens einen verbleibenden Austauschbehälter in einer Regenerationsrichtung eingesetzt werden. Alternativ oder zusätzlich kann solch ein Ventil auch als Ableitventil zum Ableiten von Wasser aus mindestens zwei der Austauschbehälter in einer Betriebsrichtung und zum Zuführen oder Ableiten von Fluid in oder aus dem mindestens einen verbleibenden Austauschbehälter in einer Regenerationsrichtung eingesetzt werden. Bevorzugt ist in beiden Verwendungsarten eine Wasser-Enthärtungsanlage, die genau drei Austauschbehälter aufweist, wobei davon zwei mit Wasser in einer Betriebsrichtung durchströmt werden und einer in einer Regenerationsrichtung betrieben wird.

Als Fluid zum Betreiben der Austauschbehälter in Regenerationsrichtung wird bevorzugt Salzsole eingesetzt. Selbstverständlich kann jedoch auch ein anderes Fluid, das sich zum Regenerieren der Austauschbehälter eignet, eingesetzt werden. Auch das Wasser, das zum Enthärten in die Austauschbehälter eingeleitet wird, kann gelöste Salze, Partikel, etc. enthalten.

Gemäß einer vorteilhaften Weiterbildung werden die mindestens drei Austauschbehälter sternförmig angeordnet, das oben beschriebene Zuführventil und/oder Ableitventil werden relativ zu den Austauschbehältern zentral angeordnet und die Rohrleitungen, die von dem Zuführventil und/oder Ableitventil zu den einzelnen Austauschbehältern führen, werden symmetrisch zueinander angeordnet. Hierdurch wird erzielt, daß die Strömungswiderstände zu den einzelnen Austauschbehältern gleich sind und damit die gleichen Durchflußmengen erzielt werden.

Weiterhin ist bevorzugt, daß sowohl ein Zuführventil und ein Ableitventil der oben beschriebenen Art vorgesehen sind und daß diese übereinander angeordnet sind, so daß beide Ventile gemeinsam über einen Umschaltmechanismus manuell oder automatisch betätigt werden können. Solch ein Umschaltmechanismus wird bevorzugt durch einen Hebel gebildet, der mit dem Eingreifabschnitt des Zuführventils und mit dem Eingreifabschnitt des Ableitventils in Eingriff steht und um die Drehachse der beiden Ventile drehbar ist. Bei einer automatischen Steuerung ist bevorzugt ein Getriebemotor vorgesehen, durch den der Eingreifabschnitt des Zuführventils und der Eingreifabschnitt des Ableitventils synchron bewegbar sind. Falls erwünscht ist, dass das Zuführventil und das Ableitventils getrennt bewegt werden, ist dies beispielsweise durch Vorsehung einer entsprechenden Kupplung oder durch Anbringung von zwei Getriebemotoren möglich.

Bei der Regeneration der Austauschbehälter kann der Anschluß derartig ausgebildet sein, daß der Austauschbehälter zum Regenerieren von dem Fluid, insbesondere der Salzsole, in der Betriebsrichtung durchströmt wird, daß also die Regenerationsrichtung die gleiche ist wie die Betriebsrichtung. Alternativ kann vorgesehen sein, daß der Austauschbehälter zur Regeneration in umgekehrter Richtung durchströmt wird, daß also die Regenerationsrichtung entgegengesetzt zu der Betriebsrichtung ist.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine Seiten-Schnittansicht eines Ventils, bei dem der Kugelkörper in einer ersten Drehstellung dargestellt ist;
- Fig. 2: eine Seiten-Schnittansicht eines Kugelventils, bei dem der Kugelkörper in der gleichen Drehstellung wie in Fig. 1 gezeigt ist, die Ansicht des Ventils im Vergleich zu Fig. 1 aber um 120° gedreht ist;
- Fig. 3: eine Seiten-Schnittansicht des Kugelventils aus Fig. 2, wobei die Ansicht des Ventils der von Fig. 1 entspricht;
- Fig. 4: eine Schnittansicht des Ventils aus den Figuren 2 und 3, wobei der Schnitt in der Ebene der drei AuswahlAnschlüsse dieses Ventils verläuft;
- Fig. 5: eine Seitenansicht des Kugelkörpers des Ventils, das in den Figuren 2 bis 4 gezeigt ist;
- Fig. 6: eine Seitenansicht des Kugelkörpers aus Fig. 5, wobei dieser in einer um 90° gedrehten Stellung gezeigt ist;
- Fig. 7: eine Schnittansicht des Kugelkörpers der Figuren 5 und 6, wobei die Schnittebene in der Ebene der drei Auswahl-Anschlüsse des Ventils dargestellt ist;
- Fig. 8 und Fig. 10: Schnittansichten des Kugelkörpers, wobei die Schnittebene senkrecht zu der Ebene der drei Auswahl-Anschlüsse des Ventils verläuft;
- Fig. 9: eine perspektivische Ansicht des Kugelkörpers;
- Fig. 11: eine perspektivische Ansicht einer Wasser-Enthärtungsanlage mit drei Austauschbehältern;
- Fig. 12: eine Schnittansicht der Wasser-Enthärtungsanlage der Fig. 11, wobei die Schnittebene durch das obere Ventil verläuft;
- Fig. 13: eine Schnittansicht der in den Figuren 11 und 12 gezeigten Wasser-Enthärtungsanlage, wobei die geknickte Schnittebene entlang der Rohrleitungen von zwei Austauschbehältern verläuft und die Knicklinie der Schnittebene auf der Drehachse der beiden gezeigten Ventile angeordnet ist; und
- Fig. 14: eine Schnittansicht der Wasser-Enthärtungsanlage der Figuren 11 bis 13, wobei die Schnittebene entlang der Rohrleitungen eines Austauschbehälters und zentral durch die beiden gezeigten Ventile verläuft.

Die nachfolgend verwendeten Richtungsangaben beziehen sich lediglich auf die jeweiligen Ansichten, die in den Figuren gezeigt sind, und sind dementsprechend nicht einschränkend auszulegen.

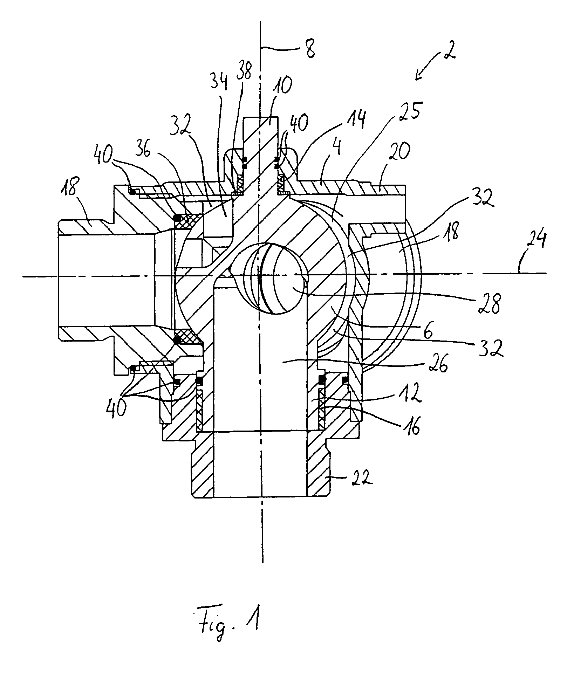

In Fig. 1 ist ein erfindungsgemäßes Ventil 2 in einer Querschnittansicht dargestellt. Das Ventil 2 weist ein Gehäuse 4 und einen Kugelkörper 6 auf, der in dem Gehäuse 4 um eine Drehachse 8 drehbar gelagert ist. Der Kugelkörper 6 weist hierzu einen Fortsatz 10 auf, der sich von dem Kugelkörper 6 in Fig. 1 nach oben erstreckt, und einen weiteren kragenförmigen Fortsatz 12, der gegenüberliegend von dem ersten Fortsatz 10 von dem Kugelkörper 6 vorsteht. Die beiden Fortsätze 10 und 12 werden in entsprechenden Lagerbuchsen 14 und 16 drehbar gelagert.

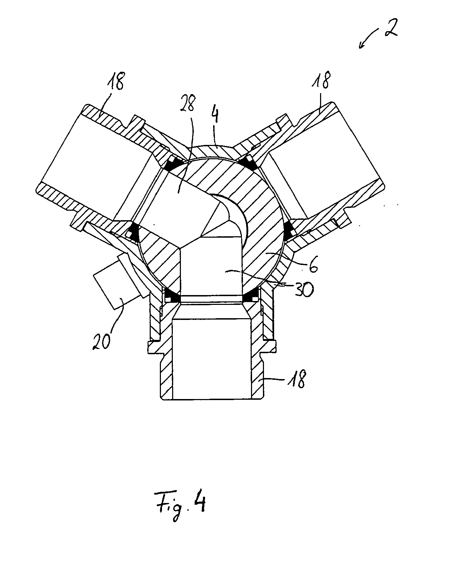

Das Gehäuse weist ferner drei Auswahl-Anschlüsse 18 auf, von denen in Fig. 1 zwei gezeigt sind. Die Auswahl-Anschlüsse 18 sind in Fig. 1 durch separate Bauteile in Form von Anschlußnippeln ausgebildet. Die drei Auswahl-Anschlüsse 18 sind in einer Ebene, die senkrecht zu der Drehachse 8 verläuft, angeordnet. Die drei Auswahl-Anschlüsse 18 sind im wesentlichen auf der Äquatorlinie des Kugelkörpers 6 angeordnet. In Umfangsrichtung der Drehachse 8 betrachtet sind die drei Auswahl-Anschlüsse äquidistant angeordnet, wie auch aus der Schnittansicht der Fig. 4 ersichtlich ist.

Das Gehäuse 4 weist ferner einen ersten Verbindungs-Anschluß 20 auf, der oberhalb von der Ebene 24 der drei Auswahl-Anschlüsse 18 angeordnet ist. Bezüglich der Ebene 24 ist auf der gegenüberliegenden Seite von dem ersten Verbindungs-Anschluß 22 ein zweiter Verbindungs-Anschluß 22 vorgesehen, der im wesentlichen auf der Drehachse 8 angeordnet ist. Der zweite Verbindungs-Anschluß 22 ist als separates Bauteil in Form eines Anschlußnippels ausgebildet.

Ein erster Durchgang 25 führt von dem ersten Verbindungs-Anschluß 20 in den Zwischenraum 32 zwischen Kugelkörper 6 und Gehäuse 4. Dieser Zwischenraum 32 erstreckt sich im Bereich des ersten Verbindungs-Anschlusses 20 sowohl oberhalb als auch unterhalb von der Ebene 24, so daß hierdurch ein großer Strömungsquerschnitt erzielt wird. In dem Kugelkörper 6 ist ferner ein Kanaldurchgang in Form eines Tunnels 34 ausgebildet, der von dem Zwischenraum 32 in das Innere des Kugelkörpers 6 führt und dann in Höhe der Auswahl-Anschlüsse 18 aus dem Kugelkörper 6 austritt. Die Anordnung ist derart gewählt, daß der Tunnel 34 in drei vorbestimmten Drehstellungen des Kugelkörpers 6 jeweils in einem der Auswahl-Anschlüsse 18 mündet, so daß in jeder der drei vorbestimmten Drehstellungen ein anderer Auswahl-Anschluß 18 über den ersten Durchgang 25 mit dem ersten Verbindungs-Anschluß 20 verbunden ist. An den drei Auswahl-Anschlüssen 18 ist jeweils ein Formring 36 vorgesehen, der dichtend an dem Kugelkörper 6 anliegt, so daß dadurch eine direkte Verbindung zwischen den Auswahl-Anschlüssen 18 und dem Zwischenraum 32 verhindert wird.

Von dem zweiten Verbindungs-Anschluß 22 setzt sich der zweite Durchgang 26 fort, der zentral in das Innere des Kugelkörpers 6 führt und sich darin in zwei Teildurchgänge 28, 30 aufzweigt, von denen in Fig. 1 nur einer gezeigt ist. Das Ventil 2 weist vorbestimmte Drehstellungen des Kugelkörpers 6 auf, in denen die beiden Teildurchgänge 28, 30 mit jeweils zwei der Auswahl-Anschlüsse 18 verbunden sind. Der erste, in Fig. 1 vertikal verlaufende Abschnitt des zweiten Durchgangs verläuft zentral durch den kragenförmigen Fortsatz 12 und ist damit unabhängig von der Drehstellung des Kugelkörpers 6 ständig mit dem zweiten Verbindungs-Anschluß 22 verbunden. Demgemäß kann durch Drehen des Kugelkörpers 6 der zweite Verbindungs-Anschluß mit zwei gewünschten Auswahl-Anschlüssen 18, die nicht mit dem ersten Durchgang 25 verbunden sind, verbunden werden.

Das Ventil weist ferner einen Druckring 38 auf, durch den der Kugelkörper 6 relativ zu dem Gehäuse 4 in Richtung der Drehachse 8 fixiert wird. Ferner sind mehrere Dichtungsringe 40 vorgesehen, durch die gewährleistet wird, daß der erste Durchgang 25 und der zweite Durchgang 26 fluiddicht voneinander abgeschlossen sind, und daß ferner eine dichte Anordnung zwischen Kugelkörper 6 und Gehäuse 4 sowie zwischen den einzelnen Gehäusebauteilen 4, 18 besteht.

Wie aus Fig. 1 ersichtlich ist, wird der links dargestellte Auswahl-Anschluß 18 über den ersten Durchgang 25 mit dem ersten Verbindungs-Anschluß 20 verbunden, während die anderen beiden Auswahl-Anschlüsse 18 über den zweiten Durchgang 26, der die zwei Teildurchgänge 28, 30 und einen in Fig. 1 vertikal verlaufenden Abschnitt aufweist, mit dem zweiten Verbindungs-Anschluß 22 verbunden. Ferner ist ersichtlich, daß durch Drehen des Kugelkörpers 6 um die Drehachse 8 der erste Durchgang 25 mit einem anderen der Auswahl-Anschlüsse 18 verbindbar ist, während gleichzeitig der zweite Durchgang 26 mit den anderen beiden verbleibenden Auswahl-Anschlüssen 18 verbunden wird. Die Strömungsrichtung in dem ersten Durchgang 25 und dem zweiten Durchgang 26 kann unabhängig voneinander gewählt werden, je nach dem, in welcher Leitungsanordnung das Ventil 2 eingesetzt wird.

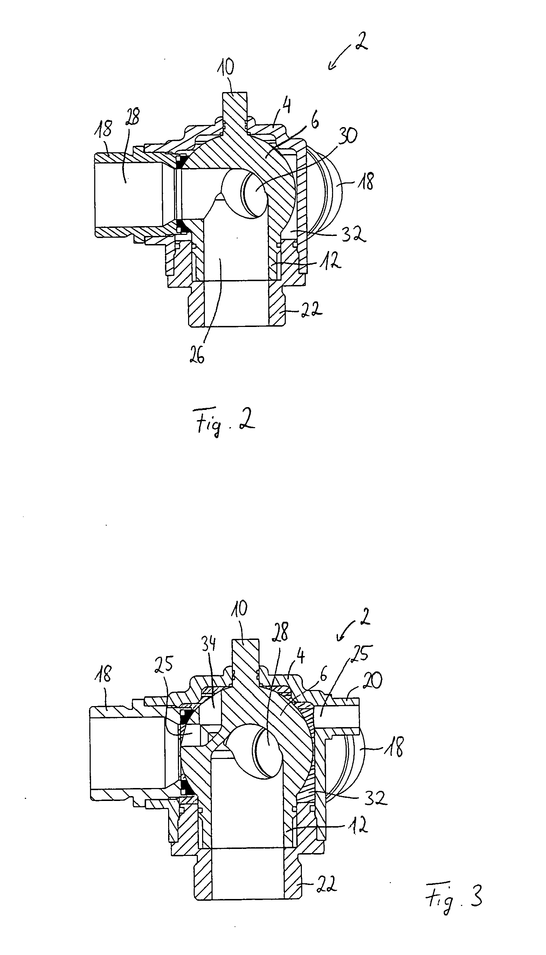

Die Figuren 2 bis 4 zeigen ein erfindungsgemäßes Ventil 2, wobei in diesen Figuren die einzelnen Bauteile nicht so detailliert wie in Fig. 1 dargestellt sind. Die einander entsprechenden Bauteile werden mit den gleichen Bezugszahlen, die bereits bei Fig. 1 verwendet wurden, bezeichnet.

Fig. 2 zeigt das Ventil 2 in der gleichen Stellung des Kugelkörpers 6, jedoch ist die Gesamtanordnung in einer Ansicht gezeigt, die um 120° gedreht zu der Ansicht der Fig. 1 ist. Dementsprechend ist der erste Verbindungs-Anschluß 20 in Fig. 2 durch das Gehäuse 4 verdeckt. Die beiden Auswahl-Anschlüsse 18, die mit dem zweiten Durchgang 26 verbunden sind, sind in Fig. 2 gezeigt.

Fig. 3 zeigt die Ansicht, wie sie bereits in Fig. 1 dargestellt ist. Zur Veranschaulichung ist der Zwischenraum 32, der einen Teil des ersten Durchgangs 25 bildet, schraffiert dargestellt. Dieser Zwischenraum wird von dem Fluid, das den ersten Durchgang 25 passiert, durchströmt.

Bei der Schnittansicht der Fig. 4, bei der der Schnitt durch die Ebene der drei Auswahl-Anschlüsse 18 verläuft, ist die sternförmige Anordnung der drei Auswahl-Anschlüsse 18 ersichtlich. Diese sind in Umfangsrichtung der Drehachse betrachtet äquidistant angeordnet, wobei zwischen jeweils zwei Auswahl-Anschlüssen 18 ein Winkel von 120° eingeschlossen wird. Aufgrund der Schnittdarstellung ist der zweite Verbindungs-Anschluß 22 und der kragenförmige Fortsatz 12 nicht dargestellt. Von dem zweiten Durchgang 26 sind lediglich die beiden Teildurchgänge 28, 30 gezeigt. Der erste Durchgang 25, der von dem dritten Auswahl-Anschluß 18 zu dem ersten Verbindungs-Anschluß 20 verläuft, ist im wesentlichen durch den Kugelkörper 6 verdeckt.

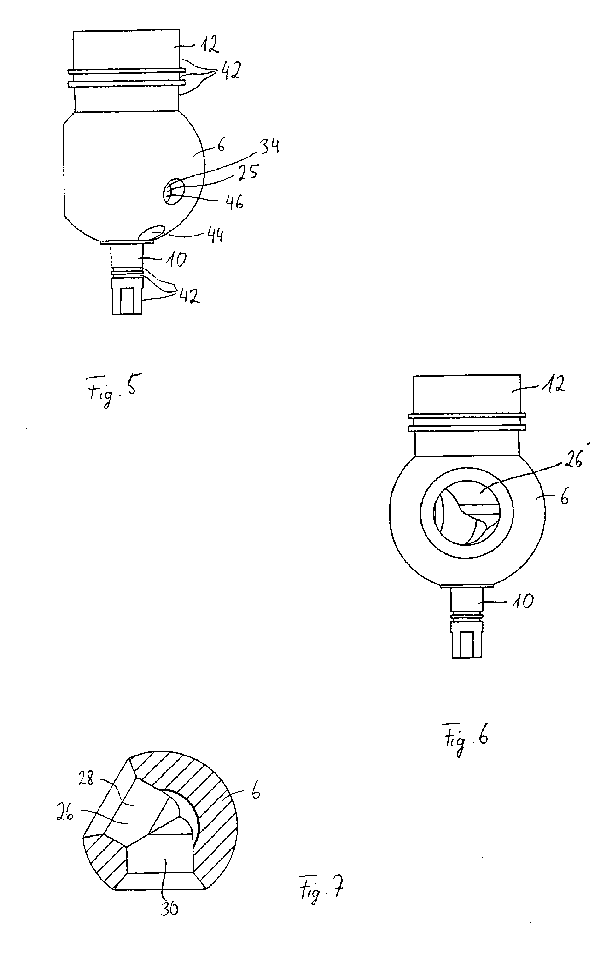

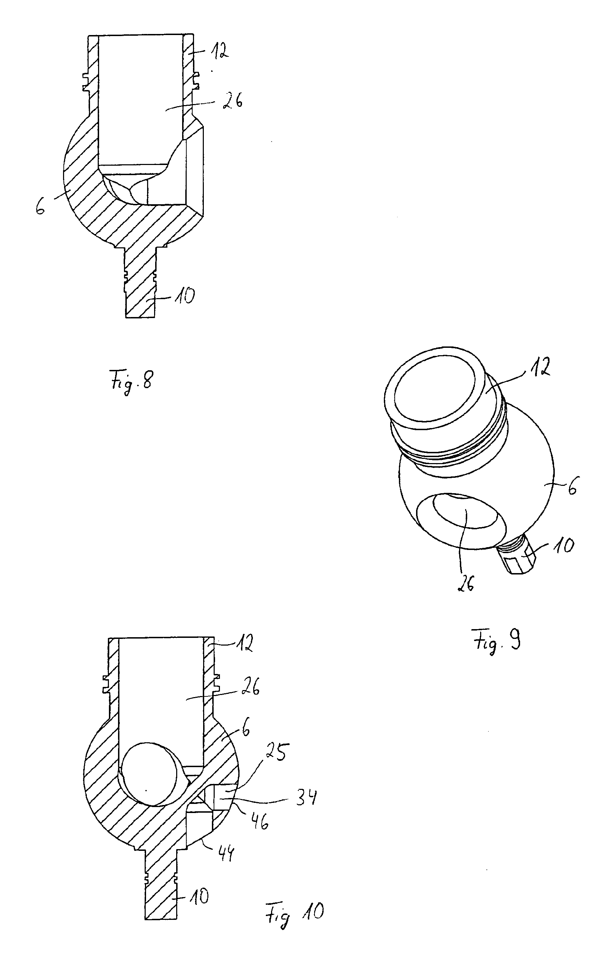

In den Figuren 5 bis 10 sind verschiedene Ansichten des Kugelkörpers 6 dargestellt. Aus diesen Figuren sind insbesondere die Anordnung des Fortsatzes 10, des kragenförmigen Fortsatzes 12, des ersten Durchganges 25 sowie des zweiten Durchganges 26 ersichtlich. An dem Fortsatz 10 und dem kragenförmigen Fortsatz 12 sind jeweils Vertiefungen 42 zur Aufnahme der Dichtungsringe 40, des Druckringes 38 und der Lagerbuchsen 14, 16 vorgesehen, wie insbesondere aus Fig. 5 ersichtlich ist. In Fig. 5 ist ferner eine erste Öffnung 44 des Tunnels 34 gezeigt, die zu dem Zwischenraum 32 zwischen Gehäuse 4 und Kugelkörper 6 führt, sowie eine zweite Öffnung 46 des Tunnels 34, die zu dem jeweiligen Auswahl-Anschluß 18 führt.

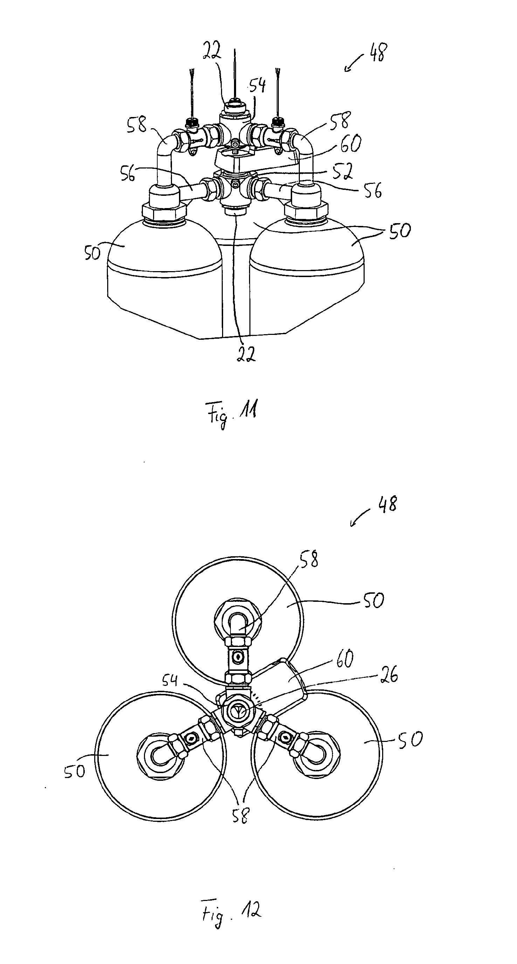

Aus den Figuren 6 bis 10 ist auch der Verlauf des zweiten Durchganges 26 mit seinen beiden Teildurchgängen 28, 30 ersichtlich. In Fig. 10 ist zusätzlich der Tunnel 34 des ersten Durchganges 25 gezeigt.

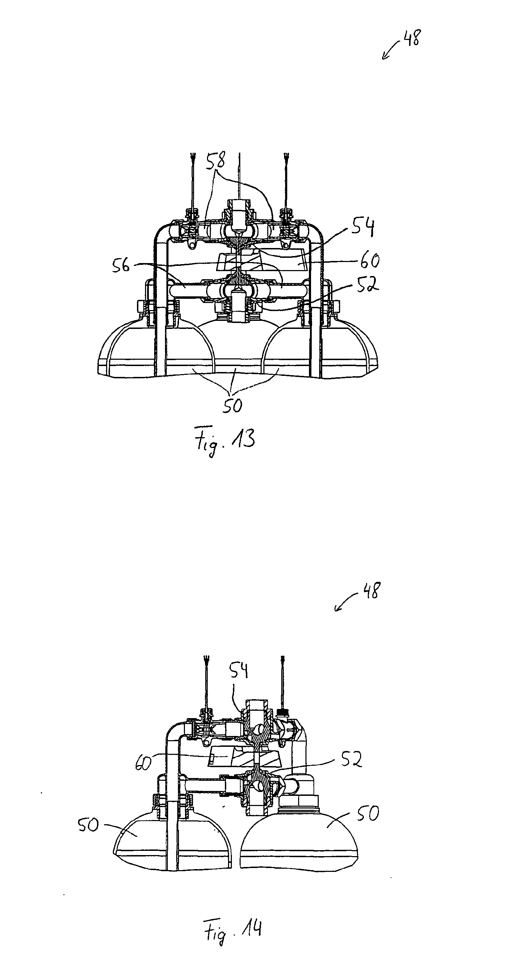

Die Figuren 11 bis 14 zeigen eine Wasser-Enthärtungsanlage 48 gemäß der vorliegenden Erfindung. Bezüglich der Funktionsweise dieser Wasser-Enthärtungsanlage 48 wird auf den einleitenden Teil verwiesen. Die Anlage 48 weist drei Austauschbehälter 50 auf, die sternförmig angeordnet sind. Ein erfindungsgemäßes Ventil der oben beschriebenen Art wird als Zuführventil 52 und ein weiteres als Ableitventil 54 eingesetzt, die beide relativ zu den Austauschbehältern 50 zentral angeordnet sind, wie aus Fig. 12 ersichtlich ist. Von dem Zuführventil 52 führen sternförmig angeordnete Zuleitungen 56 zu den jeweiligen Austauschbehältern 50, und von dem Ableitventil 54 führen sternförmig angeordnete Ableitungen 58 zu den zugehörigen Austauschbehältern 50.

Wie aus Fig. 11 ersichtlich ist, ist der zweite Verbindungs-Anschluß 22 des Zuführventils 52 nach unten ausgerichtet und mit einer (nicht gezeigten) externen Zuführleitung verbunden. Der zweite Verbindungs-Anschluß 22 des Ableitventils 54 ist nach oben ausgerichtet und mit einer (nicht gezeigten) externen Ableitleitung verbunden. Die beiden Fortsätze 10 der beiden Ventile 52 und 54 sind dementsprechend gegenüberliegend voneinander angeordnet und ein Umschaltmechanismus in Form eines Hebels 60 steht mit einem Eingreifabschnitt der beiden Fortsätze 10 in Eingriff. Durch Verschwenken des Hebels 60 werden demgemäß die Kugelkörper 6 der beiden Ventile 52 und 54 gemeinsam gedreht, so daß durch Betätigung des Hebels 60 beide Ventile 52, 54 simultan umgestellt werden können. Die Anordnung ist derart ausgebildet, daß die beiden Kugelkörper 6 der beiden Ventile 52 und 54 jeweils gleich ausgerichtet sind, so daß jeweils die gleichen Austauschbehälter 50 bei dem Zuführventil wie auch bei dem Ableitventil mit den gleichen Durchgängen 25 und 26 verbunden sind.

Wie aus dem Schnitt durch das Ableitventil 54 in Fig. 12 ersichtlich ist, sind die in Fig. 12 unten angeordneten beiden Austauschbehälter 50 mit dem zweiten Durchgang 26 verbunden. Demgemäß wird in dieser Ventilstellung Wasser über das Zuführventil 52, die Zuleitungen 56 zu den beiden in Fig. 12 unten gezeigten Austauschbehältern 50 zugeführt, anschließend durchströmt das Wasser die beiden Austauschbehälter, die mit Ionenaustauscherharz gefüllt sind, und das enthärtete Wasser wird danach über die beiden Ableitungen 58 und das Ableitventil 54 zu einer (nicht gezeigten) externen Ableitleitung geführt. Der dritte, in Fig. 12 oben gezeigte, Austauschbehälter 50 wird regeneriert, indem Salzsole über das Zuführventil 52 und die Zuleitung 56 in diesen Austauschbehälter 50 geleitet wird, die Salzsole anschließend das Ionenaustauscherharz in dem Austauschbehälter 50 durchströmt und danach über die Ableitung 58 und das Ableitventil 54 einer (nicht gezeigten) externen Leitung zugeführt wird. Die Salzsole durchströmt sowohl in dem Zuführventil als auch in dem Ableitventil den ersten Durchgang 25, während das Wasser, das zum Enthärten die anderen beiden Austauschbehälter 50 durchströmt, sowohl bei dem Zuführventil 52 als auch bei dem Ableitventil 54 den zweiten Durchgang 26 durchströmt. Sobald die Regeneration eines Austauschbehälters 50 abgeschlossen ist, können die beiden Ventile 52 und 54 durch Verschwenken des Hebels 60 derart umgestellt werden, daß in den nächsten Austauschbehälter Salzsole eingeleitet wird und dieser regeneriert wird, während die anderen beiden Austauschbehälter 50 zum Enthärten von Wasser eingesetzt werden.

Wie insbesondere anhand der Figuren 11 und 12 ersichtlich ist, sind die Zuleitungen 56 und die Ableitungen 58 symmetrisch angeordnet. Ferner sind die Strömungswege auch innerhalb der beiden Ventile 52 und 54, die zu den beiden Austauschbehältern 50, die zum Enthärten eingesetzt werden, führen, symmetrisch zueinander ausgebildet. Folglich ist der Strömungswiderstand bei den beiden Austauschbehältern 50, die zum Enthärten eingesetzt werden, gleich, so daß auch die Durchflußmengen im wesentlichen gleich sind. Dadurch wird die Effektivität der Enthärtung erhöht.

Die vorliegende Erfindung ist nicht auf die in den Figuren gezeigten Ausführungsformen beschränkt. Insbesondere kann bei der Wasser-Enthärtungsanlage der Figuren 11 bis 14 die Salzsole auch in einer Strömungsrichtung eingeleitet werden, die umgekehrt zu der Betriebsrichtung verläuft. Die beschriebene Wasser-Enthärtungsanlage funktioniert nach dem Ionenaustauschprinzip. Selbstverständlich kann das erfindungsgemäße Ventil auch bei Wasser-Enthärtungsanlagen, die nach einem anderen Prinzip funktionieren oder bei denen eine anderweitige Lösung zum Regenerieren der Austauschbehälter eingesetzt wird, verwendet werden. Ferner kann zusätzlich vorgesehen sein, daß an den einzelnen Zuleitungen und Ableitungen, die von dem Zuführventil 52 und dem Ableitventil 54 wegführen, Durchflussregler oder andere Bauteile, wie beispielsweise Druckminderer, etc. angeordnet sind, so daß zusätzlich der genaue Durchfluß durch die einzelnen Rohre einstellbar ist.

Wie bereits oberhalb erläutert wurde, muß der Kugelkörper nicht zwangsweise einen kugelförmigen zentralen Abschnitt aufweisen. Ausreichend ist vielmehr eine rotationssymmetrische Form bezüglich der Drehachse. Dementsprechend kann der Kugelkörper auch oval, zylindrisch oder anderweitig rotationssymmetrisch ausgebildet sein. Ferner ist für die Erfindung unerheblich, ob das Gehäuse aus mehreren Bauteilen, wie es beispielsweise in den Figuren durch den Gehäusekörper und die Anschlußnippel gezeigt ist, oder integral aus nur einem Bauteil gebildet sein.

Der in den Figuren 11 bis 14 gezeigte Hebel 60 kann bei einer automatischen Ansteuerung der beiden Ventile durch einen Getriebemotor ersetzt werden, der bevorzugt an der Position des in den Figuren gezeigten Hebels 60 angebracht wird.

Die beiden Durchgänge sind derart ausgebildet, daß sie zumindest teilweise in dem Zwischenraum zwischen Kugelkörper und Gehäuse und/oder in dem Kugelkörper verlaufen, so daß die oberhalb beschriebene Funktionalität erfüllt wird. Unerheblich ist hierbei, ob weitere Abschnitte der Durchgänge zusätzlich noch durch das Gehäuse oder weitere Bauteile verlaufen. Das Wort "verbinden" wird in der vorangehenden Beschreibung und in den Ansprüchen dahingehend verwendet, daß damit eine direkte oder auch indirekte (d.h. über weitere Bauteile) Fluidverbindung zwischen den jeweils genannten Bauteilen hergestellt wird.

## Patentansprüche

1. Ventil, welches aufweist:
ein Gehäuse (4),
einen in dem Gehäuse (4) angeordneten Kugelkörper (6), der um eine Drehachse (8) in zumindest drei vorbestimmte Drehstellungen drehbar ist,
zwei Verbindungs-Anschlüsse (20, 22) und mindestens drei Auswahl-Anschlüsse (18) an dem Gehäuse (4),
zwei voneinander getrennte Durchgänge (25, 26), die zumindest teilweise in dem Zwischenraum (32) zwischen Kugelkörper (6) und Gehäuse (4) und/oder in dem Kugelkörper (6) verlaufen,
wobei ein erster Verbindungs-Anschluss (20) durch einen ersten Durchgang (25) mit jeweils mindestens einem der Auswahl-Anschlüsse (18) verbindbar ist, wobei in jeder der vorbestimmten Drehstellungen ein anderer Auswahl-Anschluss (18) über den ersten Durchgang (25) mit dem ersten Verbindungs-Anschluss (20) verbunden wird, und
wobei der zweite Verbindungs-Anschluss (22) in den vorbestimmten Drehstellungen durch den zweiten Durchgang (26) mit jeweils anderen Auswahl-Anschlüssen (18), die nicht mit dem ersten Durchgang (25) verbunden sind, verbunden wird.

2. Ventil gemäß Anspruch 1, **dadurch gekennzeichnet, dass** die Auswahl-Anschlüsse (18) im Wesentlichen in einer Ebene (24), die senkrecht zu der Drehachse (8) verläuft, und in Umfangsrichtung der Drehachse (8) zueinander im Wesentlichen äquidistant angeordnet sind.

3. Ventil gemäß Anspruch 2, **dadurch gekennzeichnet, dass** der zweite Verbindungs-Anschluss (22) im Wesentlichen auf der Drehachse (8) angeordnet ist, und dass der erste Verbindungs-Anschluss (20) in Richtung der Drehachse (8) von der Ebene (24) versetzt angeordnet ist.

4. Ventil gemäß einem der Ansprüche 1 bis 3, **dadurch gekennzeichnet, dass** der zweite Durchgang (26) von dem zweiten Verbindungs-Anschluss (22) in das Innere des Kugelkörpers (6) führt und sich darin symmetrisch in mindestens zwei Teildurchgänge (28, 30) aufzweigt.

5. Ventil gemäß einem der Ansprüche 1 bis 4, **dadurch gekennzeichnet, dass** der erste Durchgang (25) von dem ersten Verbindungs-Anschluss (20) in den Zwischenraum (32) zwischen Kugelkörper (6) und Gehäuse (4) führt und sich in einem Kanaldurchgang (34), der durch den Kugelkörper (6) verläuft, fortsetzt.

6. Ventil gemäß einem der Ansprüche 3 bis 5, **dadurch gekennzeichnet, dass** der Kugelkörper (6) gegenüberliegend von dem zweiten Verbindungs-Anschluss (22) einen Fortsatz (10) aufweist, der aus dem Gehäuse (4) vorsteht und einen Eingreifabschnitt zur manuellen oder automatischen Betätigung des Ventils aufweist.

7. Ventil gemäß einem der vorangehenden Ansprüche, **dadurch gekennzeichnet, dass** die Äquatorlinie des Kugelkörpers (6) in der Ebene (24) der mindestens drei Auswahl-Anschlüsse (18) verläuft.

8. Ventil gemäß einem der vorangehenden Ansprüche, **dadurch gekennzeichnet, dass** der erste Verbindungs-Anschluss (20) bezüglich der Ebene (24) der mindestens drei Auswahl-Anschlüsse (18) auf der gegenüberliegenden Seite von dem zweiten Verbindungs-Anschluss (22) liegt.

9. Ventil gemäß einem der Ansprüche 5 bis 8, **dadurch gekennzeichnet, dass** auf beiden Seiten der Ebene (24) der mindestens drei Auswahl-Anschlüsse (18) ein Zwischenraum (32) zwischen dem Kugelkörper (6) und dem Gehäuse (4) gebildet ist, der einen Teil des ersten Durchgangs (25) bildet.

10. Ventil gemäß einem der Ansprüche 3 bis 9, **dadurch gekennzeichnet, dass** der Kugelkörper (6) in Richtung zu dem zweiten Verbindungs-Anschluss (22) einen kragenförmigen Fortsatz (12) aufweist, durch den der zweite Durchgang (26) verläuft und der um die Drehachse (8) drehbar in dem Gehäuse (4) gelagert ist.

11. Ventil gemäß einem der vorangehenden Ansprüche, **dadurch gekennzeichnet, dass** ein Einrastmechanismus vorgesehen ist, durch den das Ventil in den mindestens drei vorbestimmten Drehstellungen einrastet.

12. Verwendung eines Ventils gemäß einem der vorangehenden Ansprüche in einer Wasser-Enthärtungsanlage, die mindestens drei Austauschbehälter (50) aufweist, als Zuführventil (52) zum Zuführen von Wasser in mindestens zwei der Austauschbehälter (50) in einer Betriebsrichtung und zum Zuführen oder Ableiten von Fluid in oder aus dem mindestens einen verbleibenden Austauschbehälter (50) in einer Regenerationsrichtung.

13. Verwendung eines Ventils gemäß einem der Ansprüche 1 bis 11 in einer Wasser-Enthärtungsanlage, die mindestens drei Austauschbehälter (50) aufweist, als Ableitventil (54) zum Ableiten von Wasser aus mindestens zwei der Austauschbehälter (50) in einer Betriebsrichtung und zum Zuführen oder Ableiten von Fluid in den oder aus dem mindestens einen verbleibenden Austauschbehälter (50) in einer Regenerationsrichtung.

14. Verwendung eines Ventils gemäß Anspruch 12 und/oder 13, **dadurch gekennzeichnet, dass** die mindestens drei Austauschbehälter (50) sternförmig angeordnet sind, dass das Zuführventil (52) und/oder das Ableitventil (54) relativ zu den Austauschbehältern (50) zentral angeordnet ist und die Rohrleitungen, die von dem Zuführventil (52) und/oder Ableitventil (54) zu den einzelnen Austauschbehältern (50) führen, symmetrisch zueinander angeordnet sind.

15. Verwendung eines Ventils gemäß einem der Ansprüche 12 bis 14, **dadurch gekennzeichnet, dass** das Zuführventil (52) und das Ableitventil (54) derart übereinander angeordnet sind, dass die Drehachsen (8) der beiden Ventile aufeinander liegen.

16. Verwendung eines Ventils gemäß Anspruch 15, **dadurch gekennzeichnet, dass** ein manuell und/oder automatisch betätigbarer Umschaltmechanismus vorgesehen ist, der mit dem Eingreifabschnitt des Zuführventils (52) und dem Eingreifabschnitt des Ableitventils (54) zusammenwirkt.

17. Verwendung eines Ventils gemäß Anspruch 16, **dadurch gekennzeichnet, dass** der Umschaltmechanismus durch einen Hebel (60) gebildet wird, der mit dem Eingreifabschnitt des Zuführventils (52) und mit dem Eingreifabschnitt des Ableitventils (54) in Eingriff steht und um die Drehachse (8) der beiden Ventile drehbar ist.

18. Wasser-Enthärtungsanlage mit mindestens drei Austauschbehältern (50), wobei zu jedem Austauschbehälter (50) eine Zuleitung (56) und eine Ableitung (58) führt, so dass Wasser in einer Betriebsrichtung von der jeweiligen Zuleitung (56) in den zugehörigen Austauschbehälter (50) und dann in die Ableitung (58) strömt, während Fluid bei einer Regeneration eines Austauschbehälters (50) in einer Regenerationsrichtung durch die Zuleitung (56), den Austauschbehälter (50) und die Ableitung (58) strömt, **dadurch gekennzeichnet, dass** ein Ventil gemäß einem der Ansprüche 1 bis 11 vorgesehen ist, bei dem die Zuleitungen (56) der Austauschbehälter (50) an den Auswahl-Anschlüssen (18) des Ventils angeschlossen sind und die Verbindungs-Anschlüsse (20, 22) an ein externes Leitungssystem angeschlossen sind.

19. Wasser-Enthärtungsanlage mit mindestens drei Austauschbehältern (50), wobei zu jedem Austauschbehälter (50) eine Zuleitung (56) und eine Ableitung (58) führt, so dass Wasser in einer Betriebsrichtung von der jeweiligen Zuleitung (56) in den zugehörigen Austauschbehälter (50) und dann in die Ableitung (58) strömt, während Fluid bei einer Regeneration eines Austauschbehälters (50) in einer Regenerationsrichtung durch die Zuleitung (56), den Austauschbehälter (50) und die Ableitung (58) strömt, **dadurch gekennzeichnet, dass** ein Ventil gemäß einem der Ansprüche 1 bis 11 vorgesehen ist, bei dem die Ableitungen (58) der Austauschbehälter (50) an den Auswahl-Anschlüssen (18) des Ventils angeschlossen sind und die Verbindungs-Anschlüsse (20, 22) an ein externes Leitungssystem angeschlossen sind.
